# EUROPEAN PATENT SPECIFICATION

(11) **EP 0 469 857 B1**
(45) Date of publication and mention of the grant of the patent: **26.01.1994**
(21) Application number: 91306976.1
(22) Date of filing: 30.07.1991
(51) Int. Cl.: A23C 19/14

(54) **Method for accelerating cheese ripening**
Verfahren zur Beschleunigung des Reifens von Käse
Méthode pour accélérer la maturation du fromage

(30) Priority: 31.07.1990 JP 204465/90
(43) Date of publication of application: 05.02.1992
(73) Proprietor: FUJI OIL COMPANY, LIMITED, Osaka-shi, Osaka-fu 542 (JP)
(72) Inventor: Yokoyama, Hitoshi, Sennan-gun, Osaka-fu (JP); Sawamura, Norio, Hashimoto-shi, Wakayama-ken (JP); Motobayashi, Noriko, Kaizuka-shi, Osaka-fu (JP)
(74) Representative: Baverstock, Michael George Douglas

## Description

The present invention generally relates to a method for producing cheese and more particularly to a method intended to shorten long-term ripening processes during the manufacture of cheese and the like.

Western eating habits continue to make use of cheese and the like in ever increasing amounts in a variety of foods. There are various kinds of cheese and the production methods thereof are diverse. However, a common disadvantage encountered in the use of any of the production methods is a considerably long ripening time. Ripening is necessary to mature the taste and texture of the cheese, which is carried out in the presence of lactobacilli, enzyme or the like. It takes several weeks to half a year at least and in general one or more years to ripen the cheese. As ripening proceeds gradually over this long period by the action of the added lactobacilli or enzyme, the taste and texture of the cheese harmonise. The formation of the taste and texture is greatly dependent on the ripening period, the nature of the germs and amount of germs added, and is further dependent on the temperature and moisture level, so that every kind of cheese has its own taste and texture. Moreover, people cherish the traditions peculiar to each kind of cheese or each production area.

However, the above-mentioned long period necessary for ripening undesirably increases the cost of the cheese and causes a delay in response to changes in demand.

More specifically, since several weeks or one year may be needed for ripening, a large amount of money and labour is required to be invested in raw material, ripening place, control of the ripening conditions, etc during the ripening period. As a result, the manufacturing cost of the cheese is raised. Therefore, it has been strongly desired to shorten the ripening period to produce, particularly to mass-produce, the cheese.

Meanwhile, some proposals have been made for shortening the ripening period. For example, it is disclosed in Japanese Patent Publication No. 56-29973 (29973/1981) to improve a starter, whereby the ripening term is reduced to 3-4 weeks from several months. Likewise, Japanese Patent Publication No. 56-38169 (38169/1981) reveals raising the ratio of moisture to shorten the fermentation term to ten days. According to another Japanese Patent No. 63-502877 (502877/1988), it is suggested to leave the cheese in an electric field during a part of the ripening period, so that the ripening period is reduced to approximately four weeks.

In any method referred to above, however, ten or more days are still required for ripening. Further the method by the Japanese Patent Publication No. 56-38169 is applicable only to liquid cheese. Therefore, the above prior art disclosures are not considered very suitable for shortening the ripening period.

In addition, liquid cheese is unstable from a viewpoint of microorganisms, and therefore it is prone to suffer such unfavourable flavour as is called off-flavour or to suffer a deterioration in the balance of taste due to the generation of bitterness.

The present invention provides a method for producing cheese and the like in a state such that the taste, texture, etc are fully satisfied, while considerably shortening the ripening term.

Noting that the germs increase less as the pressure is raised and finally die under high pressure, the inventors of the present invention have found it possible to control the action of a specific germ by controlling the pressure. The present invention has been accomplished from further studies into the application of the above finding.

The ripening method for cheese and the like according to the present invention is characterized in that the cheese and the like are ripened in the presence of lactobacilli and, if necessary, enzyme under a pressure of 100-2500kg/cm².

The fundamental aspects of the present invention will be discussed hereinbelow.

The kind of cheese to which the present invention is applicable is not specifically restricted, any kind will do so long as it brews cheese-like taste through ripening under anaerobic conditions. The present invention is particularly advantageous to types of cheese which require a long ripening period.

For example, the present invention may be applied to a traditional cheese which is produced by ripening of milk after whey is separated therefrom or to a so-called imitation cheese which is obtained from cheese-like emulsified material using lactic fat or vegetable oil as the fat and oil component and skim milk or vegetable protein as the protein component.

Generally, the method of producing cheese includes a preparatory process to heat and sterilize the raw milk, an adding process to add a starter such as lactobacilli, etc, a coagulating process to add a coagulant such as rennet, a curd process to remove whey and to cut, stir, and heat the coagulated milk and to add salt, a pressurizing/moulding process, a coating process to apply paraffin, and a ripening process, etc.

To remove the whey, the traditional squeezing method or modern ultrafiltration method is employed. The cheese-like food known as imitation cheese is obtained without removing the whey. The ripening method of the present invention is applicable to any method as above, and achieves a remarkable shortening of the ripening period.

Regarding the pressure to be added during ripening, 100-2500kg/cm² is preferable. If the pressure is lower than 100kg/cm², little effect is expected even through the control of the other ripening conditions. If the pressure exceeds 2500kg/cm², the activity of the added lactobacilli is extraordinarily reduced, which is not beneficial to the promotion of ripening.

An example of technique and apparatus for applying pressure during the production is as follows. The cheese material may be sealed under vacuum within a water-proof container made of a synthetic resin film and placed in a pressure resistant container filled with water. A cylinder-shaped pressuring part is provided in a part of the pressure resistant container. Therefore, when the inside of the pressure resistant container is pressurized by means of a piston in the cylinder, the cheese material is put under pressure. Although the piston is driven generally by oil pressure, a load may be added in the case where the pressure is relatively small.

The number of lactobacilli added to the material will preferably be larger than that used in the usual manufacturing method. Although it is usual to add approximately 10⁶ lactobacilli per 1g of solid components of the material, according to the present invention, ten times that quantity, namely, 10⁷ or more is preferably included for 1g of the solid components. This is to accelerate ripening against the suppressed propagation of the lactobacilli under the high pressure.

Since it is desirable that 10⁷ or more lactobacilli are present per 1g of the solid components at the pressurizing/ripening stage as is mentioned hereinabove, lactobacilli of the usual kind may be condensed by a centrifuge to increase their density ten or more times and then added immediately to the material before the ripening. Alternatively, the lactobacilli may be added in the usual manner and multiplied before the curd is separated.

Any kind of lactobacilli used in the general production of cheese may be employed in the present invention, e.g., Streptococcus lactis, Str. thermophilus, Str. durans, Str. faecalis, Lactobacillus bulgaricus, Lact. casei, etc. The heat resistance of these lactobacilli differs one from the other. However, since the activity of the lactobacilli during ripening under high pressure according to the present invention is more greatly influenced by the pressure than the temperature, the ripening temperature need not be particularly specified so long as it is suitable not to kill the lactobacilli. It is enough to control the temperature approximately to the appropriate temperature for the particular germ used for ripening.

Besides the lactobacilli, enzyme such as protease, lipase or the like may be added as necessary. The origin of the enzyme is not particularly limited. Accordingly, both the enzyme referred to above and the enzyme held by the lactobacilli work together to foster the taste and texture peculiar to the kind of cheese.

The ripening conditions are determined by the temperature, pH, moisture and concentration of added salt in addition to the above-described pressure, lactobacilli and enzyme. The present invention requires no special specification for these factors, and is applicable not only under the conditions of the usual production methods, but so long as the activity of the lactobacilli is not brought to a halt.

If the ripening conditions are kept satisfactory as described above, the ripening time can be reduced remarkably. For example, although it conventionally takes 6 months to ripen Cheddar cheese, three days can bring about equivalent ripening according to the present invention.

In the meantime, the most annoying hindrance to ripening of the cheese is the propagation of various unwanted germs. Of course, the raw material should be sterilized to control the propagation of such germs, and at the same time, moisture, pH, salt and temperature should be controlled to suppress the propagation. Hitherto, ripening has proceeded gradually over a long period while maintaining the conditions necessary to activate the useful germ, that is, lactobacilli except the above-noted various germs, through control of the above factors. In contrast according to the present invention the propagation of the various germs is controlled mainly by the pressure instead of achieving the conditions predetermined to be necessary to activate only the lactobacilli. Therefore, the controlling factors may be less strictly observed.

Since the propagation of germs under high pressure weakens in accordance with an increase of the pressure, the activity of the germs can be controlled by controlling the pressure. The present invention utilizes this controlling effect. In other words, ripening is carried out under high pressure over a short period in the presence of an excessive amount of lactobacilli while suppressing the multiplication of the various unwanted germs. As a result, ripening is effective under any reasonable condition of moisture, pH, salt and temperature. The present invention makes it possible to produce low-salt cheese or to raise the temperature to accelerate ripening.

The added enzyme as well as the enzyme held by the lactobacilli work in combination with the lactobacilli during ripening. Accordingly, the ripening speed is increased.

The present invention is illustrated by the following examples.

### Embodiment 1, Comparative Example 1

100 parts of raw milk (containing fat by 3.1%) is sterilized at 75°C for 15 sec. and cooled to 30°C. Thereafter, 1.5 parts of a starter of lactobacilli (BD starter by Handsen Co., Ltd.: concentration 15x10⁸/g), 0.1 part of calcium chloride and 0.003 part of rennet (liquid type by Dairy Land Food Laboratory Co., Ltd.) are added, thereby to obtain a coagulated milk curd. The obtained curd is cut to the size of a soya bean. After stirring, about 1/3 whey is removed. The curd is heated to 40°C to ferment for 90 min. Then, the remaining whey is nearly completely removed. The resultant curd is treated by Cheddaring and milling and then, 3 parts of refined salt are added, and it is stirred and mixed uniformly. The curd after moulding is sent to a preliminary squeezing process under the pressure 5kg/cm² for a day and night before the main squeezing process. The curd is subsequently cut to 10 cm cubes, put in a bag of polyethylene and sealed in vacuum. Thereafter, the sealed cubes are left in a pressure resistant container filled with water at 25°C for three days under the pressure (kg/cm²) described in Table 1.

The quality of the finished Cheddar cheese is compared with respect to the total containing amount of amino acid (mg/g) and taste.

A commercially-available Cheddar cheese (ripened in 6 months) and a cheese produced in the same manner as in Embodiment 1 under ordinary pressure (Comparative example 1) are described in Table 1 for comparison.

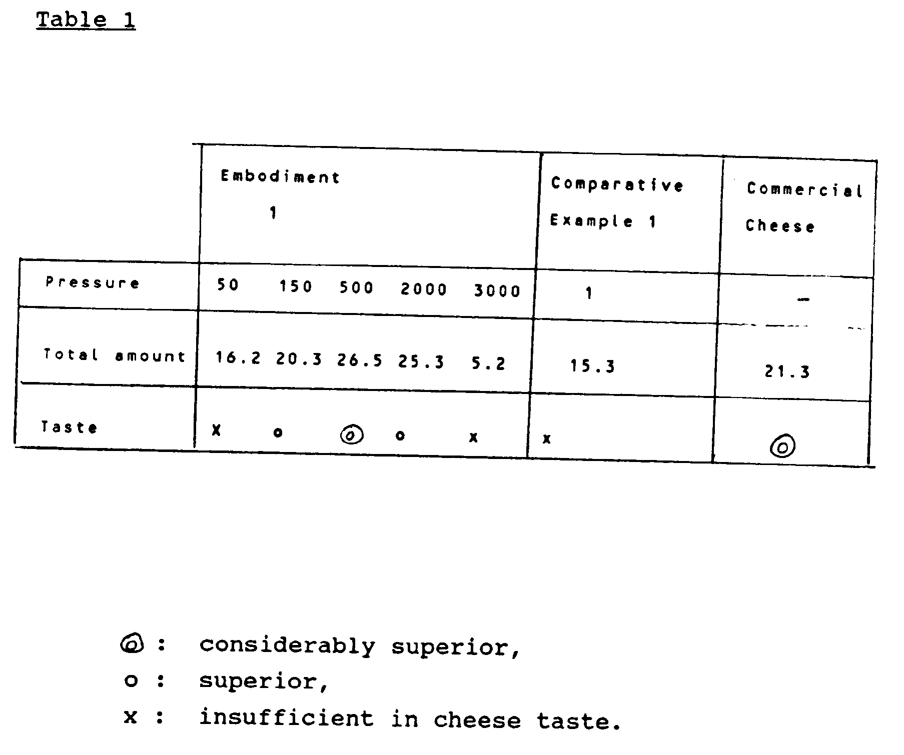

### Embodiment 2, Comparative Example 2

In Embodiment 2, when 3 parts of refined salt is added to the curd prepared in the same manner as in Embodiment 1, 0.1 part of Italase (Dairy Land Food Laboratory Co., Ltd.) as lipase and 0.2 part of Protin FN (Daiwa Chemical Co., Ltd.) as protease are added simultaneously. Parmesan cheese is produced under a pressure 500kg/cm² in exactly the same manner as in Embodiment 1. The quality, etc are compared as shown in Table 2.

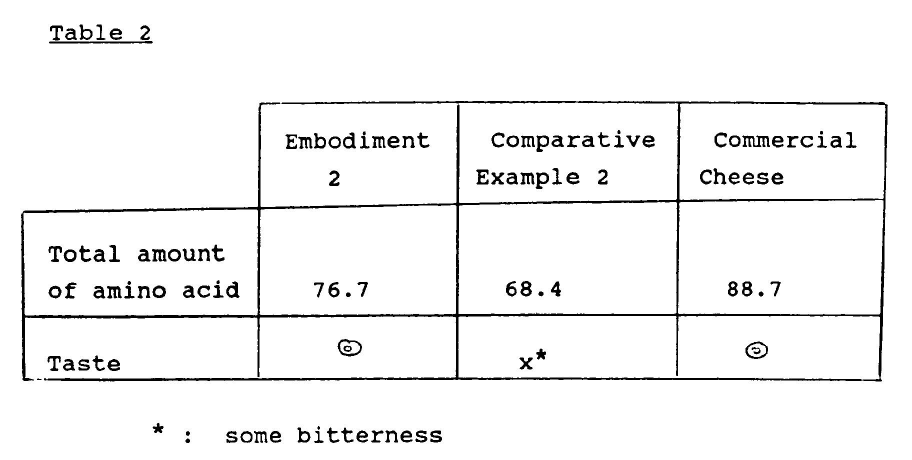

### Embodiment 3, Comparative Example 3

16 parts of milk fat, 15 parts of casein sodium, one part of powdered skim milk, 68 parts of water,3 parts of salt, 0.2 part of extract of enzyme, 0.5 part of secondary sodium phosphate (12H20), and 0.1 part of lecithin are added, stirred, emulsified, heated and sterilized at 80°C for 10 min., which is then cooled to 35°C thereby obtaining emulsified paste.

Thereafter, 1.5 parts of a starter of lactobacilli (BD starter by Handsen Co., Ltd.: concentration 20x10⁸/g), 0.05 part of protin FN (daiwa Chemical Co., Ltd.) and 0.05 part of italase are added to the emulsified paste. The material is filled in a bag of polyethylene and left for three days under a pressure of 700kg/cm².

For the purpose of comparison, Comparative example 3 which is obtained by leaving the above material filled in a polyethylene bag for three days under atmospheric pressure is shown in Table 3 as well.

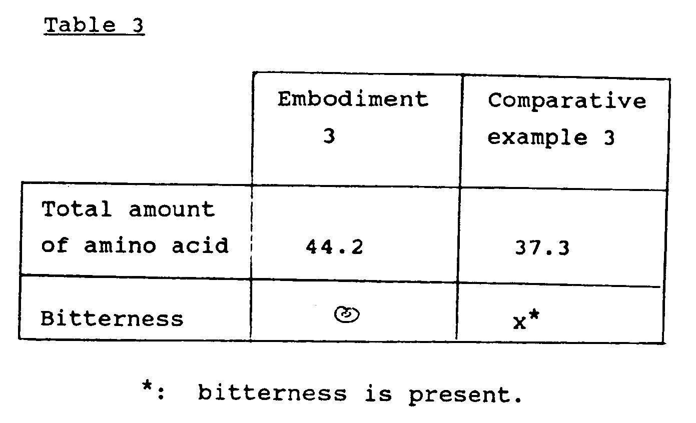

As is clear from the foregoing description, the cheese material is ripened under high pressure according to the present invention, and this enables the desired taste and texture to be obtained in a considerably short time. The problems inherent in the conventional method i.e., high manufacturing cost due to a long ripening period and difficulty in controlling the balance in supply and demand can be solved all at once.

## Claims

1. A method for producing cheese comprising a step of carrying out ripening under a pressure of 100-2500kg/cm² in the presence of at least lactobacilli.

2. A method for producing cheese and the like, comprising a step of carrying out ripening under a pressure of 100-2500kg/cm² in the presence of both lactobacilli and enzyme.

3. A method as claimed in claim 1 or claim 2 wherein said enzyme is lipase and/or protease.

4. A method as claimed in any one of claims 1 to 3 wherein the lactobacilli are included in an amount of 10⁷ or more per 1g of the solid component of the material at the start of ripening.

## Patentansprüche

1. Verfahren zur Herstellung von Käse, umfassend einen Schritt der Ausführung der Reifung unter einem Druck von 100 bis 2500 kg/cm² in Gegenwart von zumindest Lactobacilli.

2. Verfahren zur Herstellung von Käse und dergleichen, umfassend einen Schritt der Ausführung der Reifung unter einem Druck von 100 bis 2500 kg/cm² in Gegenwart von sowohl Lactobacilli wie Enzymen.

3. Verfahren gemäss Anspruch 1 oder Anspruch 2, dadurch **gekennzeichnet**, dass das Enzym Lipase und/oder Protease ist.

4. Verfahren gemäss einem der Ansprüche 1 bis 3, dadurch **gekennzeichnet,** dass die Lactobacilli in einer Menge von 10⁷ oder mehr pro 1 g Festbestandteile des Materials zu Beginn der Reifung eingeschlossen werden.

## Revendications

1. Procédé de production de fromage, comprenant une étape consistant à réaliser l'affinage sous une pression de 100 à 2500 kg/cm² en présence au moins de Lactobacillus.

2. Procédé de production de fromage et similaire, comprenant une étape consistant à réaliser l'affinage sous une pression de 100 à 2500 kg/cm² en présence de Lactobacillus et d'une enzyme.

3. Procédé selon la revendication 1 ou la revendication 2, dans lequel ladite enzyme est une lipase et/ou une protéase.

4. Procédé selon l'une quelconque des revendications 1 à 3, dans lequel les Lactobacillus sont inclus en une quantité supérieure ou égale à 10⁷ par gramme de composant solide de la substance au début de l'affinage.
